# EUROPÄISCHE PATENTSCHRIFT

(11) **EP 2 226 922 B1**
(45) Veröffentlichungstag und Bekanntmachung des Hinweises auf die Patenterteilung: **19.11.2014**
(21) Anmeldenummer: 09003359.8
(22) Anmeldetag: 07.03.2009
(51) Int. Cl.: H02K 11/00, H02K 5/22

(54) **Elektronikeinheit für Elektromotoren, vorzugsweise für Aussenläufermotoren mit integrierter Steuerelektronik und Elektromotor mit einer solchen Elektronikeinheit**
Electronic unit for electric motors, particularly for external rotor motors with integrated control electronics and electric motor with such an electronic unit
Unité électronique pour moteurs électriques, de préférence pour moteurs à rotor extérieur dotés d'une commande électronique intégrée, et moteur électrique doté d'une telle unité électronique

(43) Veröffentlichungstag der Anmeldung: 08.09.2010
(73) Patentinhaber: ZIEHL-ABEGG SE, 74653 Künzelsau (DE)
(72) Erfinder: Knorr, Joachim, 97996 Niederstelten (DE); Sturm, Thorsten, 74238 Krautheim (DE)
(74) Vertreter: Jackisch-Kohl, Anna-Katharina

(56) Entgegenhaltungen:
- EP-A- 0 624 946
- EP-A- 1 059 723
- EP-A- 1 213 693
- EP-A- 1 217 715
- EP-A- 1 701 431
- EP-A- 1 747 971
- EP-A1- 1 063 751
- EP-A1- 1 947 343
- WO-A-02/067405
- WO-A-2008/009554
- DE-A1- 2 908 936
- US-A- 6 124 692
- US-A1- 2006 158 049

## Beschreibung

Die Erfindung betrifft einen Elektromotor, vorzugsweise einen Außenläufermotor mit integrierter Steuerelektronik, nach dem Oberbegriff des Anspruches 1.

Bei Elektromotoren, Insbesondere Außenläufermotoren mit integrierter Steuerelektronik, ist es notwendig, neben der Zuführung und dem Anschluss der Leitungen für die Stromversorgung auch Leitungen für die Steuerung und Überwachung oder für Sensoren anzuschließen. Im Einbauraum der Elektronikeinheit solcher Elektromotoren ist die Leistungselektronik-Baugruppe untergebracht. Die Bauelemente der Leistungselektronik-Baugruppe können bei der Montage, aber auch bei Nachrüstarbeiten, beschädigt oder versehentlich berührt werden. Liegt am Elektromotor noch Spannung an, besteht bei einer versehentlichen Berührung dieser Bauelemente eine erhebliche Gefahr.

Es ist bei einem Elektromotor bekannt (EP 1 947 343 A1), die Leistungselektronik-Baugruppe in einen Einbauraum einer Statorbuchse unterzubringen. Durch einen Deckel ist die Leistungselektronik vor Berührung geschützt. Mit der Leistungselektronik wird die Basisfunktionalität des Elektromotors gewährleistet. Funktionserweiterungen des Elektromotors sind nicht vorgesehen.

Bei einem anderen bekannten Elektromotor (EP 1 063 751 A1) wird die Stirnseite des Motorgehäuses durch einen Deckel geschlossen. Anstelle des Deckels kann an das Motorgehäuse eine Schalteinrichtung aufgesetzt werden, die in Form einer elektronischen Schaltuhr ausgebildet ist und ein Gehäuse aufweist, in dem unter anderem ein Display sowie Taster angeordnet sind. Zum Schutz des Displays und der Taster wird auf das Gehäuse der Deckel aufgesetzt.

Es ist schließlich ein Elektromotor bekannt (WO 02/067405 A), bei dem auf das Motorgehäuse quer zu dessen Achse ein Gehäuse aufgesetzt ist, in dem sich ein Stellglied als Leistungselektronik mit Schützen befindet. Getrennt vom Stellglied ist in diesem Gehäuse die Steuerelektronik untergebracht. Innerhalb des Gehäuses kann ein Kommunikationsmodul untergebracht werden, das auf die Steuereinheit wirkt und das als Schnittstellenbaustein oder als Busankoppler dient. Das Gehäuse ist mit Steuereingängen versehen, an die die Steuerleitungen oder -module angeschlossen werden.

Der Erfindung liegt die Aufgabe zugrunde, den gattungsgemäßen Elektromotor so auszubilden, dass an ihm problemlos Montage- und/oder Nachrüstarbeiten vorgenommen werden können.

Diese Aufgabe wird beim gattungsgemäßen Elektromotor erfindungsgemäß mit den kennzeichnenden Merkmalen des Anspruches 1 gelöst.

Beim erfindungsgemäßen Elektromotor wird der Einbauraum der Elektronikeinheit durch einen Deckel geschlossen, der zumindest teilweise aus für Signale, wie IR-Signale oder Funksignale, durchlässigem Material besteht. Dadurch besteht die Möglichkeit, von außen im Einbauraum befindliche Bauteile des Elektromotors einzustellen, zu verstellen, zu überwachen oder auch zu steuern, ohne dass der Deckel geöffnet werden muss. Der Deckel dichtet den Anschlussbereich und den Einbauraum des Elektromotors in hoher Schutzart ab. Da durch den Deckel hindurch eine kabellose Signalübertragung möglich ist, lässt sich mit Vorteil im Signalweg unterhalb des Deckels wenigstens ein Funktionserweiterungsmodul vorsehen. Mit den Signalen kann dieses Funktionserweiterungsmodul betätigt werden. Die Verwendung des Funktionserweiterungsmoduls bietet die Möglichkeit, den die Elektronikeinheit enthaltenden Elektromotor mit einer Basisfunktion auszustatten, welche die üblicherweise anfallenden Einsatzfälle abdeckt. Benötigt der Anwender weitere Funktionen des Elektromotors, dann kann er das Funktionserweiterungsmodul nachrüsten, das die vom Anwender gewünschten Zusatzfunktionen ermöglicht. Das Berührschutzelement deckt zumindest die spannungs/stromführenden elektrischen/elektronischen Elemente der Leistungselektronik-Baugruppe ab. Diese Elemente sind darum zuverlässig vor Beschädigung und auch vor einer unbeabsichtigten Berührung geschützt. Selbst wenn die Elektronikeinheit unter Spannung/Strom stehen sollte, besteht keine Gefahr, dass eine Gefährdung bei versehentlicher Berührung dieser Elemente für die jeweilige Person besteht. Darüber hinaus dient das Berührschutzelement auch als Schutz vor Verschmutzung der entsprechenden Elemente.

Das Berührschutzelement ist mit wenigstens einem Aufnahmeplatz für das Funktionserweiterungsmodul versehen. Es wird am Aufnahmeplatz des Berührschutzelementes gebildet, der durch eine Vertiefung im Berühr- schutzelement gebildet ist. Die Vertiefung ermöglicht einen einfachen Einbau des Funktionserweiterungsmoduls und dient auch zu dessen Lagesicherung. Der Anwender kann selbst die gewünschten zusätzlichen Funktionen durch Einbau des entsprechenden Funktionserweiterungsmoduls an seinen Elektromotor erreichen.

Vorteilhaft ist der Deckel auf der Statorbuchse unter Zwischenlage einer Dichtung befestigt, die vorzugsweise an den Rand des Deckels angespritzt ist. Durch die Dichtung wird der Einbauraum einwandfrei durch den Deckel abgedichtet.

Vorteilhaft ist es, wenn das Berührschutzelement mit seinem Rand an der Innenseite der den Einbauraum umgebenden Wand anliegt. Dann ist der gesamte Einbauraum durch das Berührschutzelement abgedeckt. Dadurch wird auch die gesamte Leistungselektronik-Baugruppe vom Berührschutzelement überdeckt, so dass sämtliche Elemente der Leistungselektronik-Baugruppe vor Berührung, Beschädigung oder Verschmutzung geschützt sind.

Vorteilhaft ist das Berührschutzelement zumindest über deinen Teil seines Umfanges mit wenigstens einer rillenförmigen Vertiefung versehen. Sie dient als Auffangrinne für Flüssigkeit, die sich gegebenenfalls im Einbauraum oberhalb des Berührschutzelementes bildet. In der rillenförmigen Vertiefung wird die Flüssigkeit aufgenommen und kann einfach entfernt werden. Dadurch wird verhindert, dass die Flüssigkeit zur Leistungselektronik-Baugruppe gelangt.

Es ist vorteilhaft, wenn das Berührschutzelement einen vertieften Bereich aufweist. Er wird vorteilhaft umfangsseitig durch einen Teil der den Einbauraum umgebenden Wand begrenzt.

Der vertiefte Bereich ist vorteilhaft in dem Bereich vorgesehen, in dem die Wand mit Durchtrittsöffnungen für von außen zugeführte Anschlusskabel versehen ist. Beim Anschließen der Anschlusskabel kann es vorkommen, dass bei der Abisolation der Anschlusskabel Teile in die Elektronikeinheit fallen. Sie werden im vertieften Bereich des Berührschutzelementes aufgefangen.

Vorteilhaft liegen die Durchtrittsöffnungen in einem ebenen und damit abgeflachten Teil der den Einbauraum begrenzenden Wand. Diese Lage der Durchtrittsöffnungen hat den Vorteil, dass die Anschlusskabel einfach montiert werden können.

Das Berührschutzelement ist vorteilhaft an seiner der Leistungselektronik-Baugruppe zugewandten Seite mit wenigstens einem Fixierelement für Bausteine der Leistungselektronik-Baugruppe versehen. Das Fixierelement kann dazu herangezogen werden, Schwingungen dieses Bausteines zu verringern, vorzugsweise zu vermeiden. Dadurch wird ein Bruch der Kontaktdrähte zu diesem Baustein zuverlässig verhindert.

Wenn das Fixierelement einstückig mit dem Berührschutzelement ausgebildet ist, ist eine einfache Herstellung möglich. Das Berührschutzelement kann in diesem Falle zusammen mit dem Fixierelement in einem einzigen Spritzgußvorgang aus Kunststoff hergestellt werden.

Bei einer vorteilhaften Ausgestaltung ist das Berührschutzelement an seiner der Leistungselektronik-Baugruppe zugewandten Seite mit wenigstens einem Abstützelement versehen. Es versteift das Berührschutzelement, das darum nur eine geringe Dicke haben kann. Außerdem wird über das Abstützelement das Berührschutzelement in der Einbaulage zuverlässig abgestützt.

Es ist von Vorteil, wenn sich das Abstützelement auf einem in den Einbauraum ragenden, vorzugsweise hülsenförmigen Ansatz der Statorbuchse abstützt, in der die Leistungselektronik-Baugruppe angeordnet ist. Vorteilhaft ist hierbei, wenn das Abstützelement so ausgebildet ist, dass es den Ansatz abdichtet.

Eine sichere Befestigung des Berührschutzelementes in der Einbaulage kann in vorteilhafter Weise dadurch erreicht werden, dass der Deckel unter Druck auf dem Berührschutzelement aufliegt.

Der Deckel besteht vorteilhaft zumindest teilweise aus lichtdurchlässigem Material. Dadurch ist es möglich, im Einbauraum vorhandene Signal/ Leuchtelemente von außen sehen zu können. Der Deckel kann insgesamt aus lichtdurchlässigem Material bestehen. Es ist aber auch möglich, dass der Deckel nur in dem Bereich lichtdurchlässig ausgebildet ist, auf den die Lichtstrahlen von der Innenseite her auftreffen.

Weitere Merkmale der Erfindung ergeben sich aus den weiteren Ansprüchen der Beschreibung und den Zeichnungen.

Die Erfindung wird anhand eines in den Zeichnungen dargestellten Ausführungsbeispieles näher erläutert. Es zeigen
- Fig. 1: in explosiver Darstellung eine Elektronikeinheit eines erfindungsgemäßen Elektromotors,
- Fig. 2: ein Aufnahmeteil der erfindungsgemäßen Elektronikeinheit gemäß Fig.1,
- Fig. 3: in perspektivischer Darstellung ein Gehäuse eines in den Aufnahmeteil gemäß Fig. 2 einzusetzenden Funktionserweiterungsmoduls,
- Fig. 4: ein im Gehäuse gemäß Fig. 3 untergebrachtes Bauteil,
- Fig. 5: das Aufnahmeteil gemäß Fig. 2 in Seitenansicht.

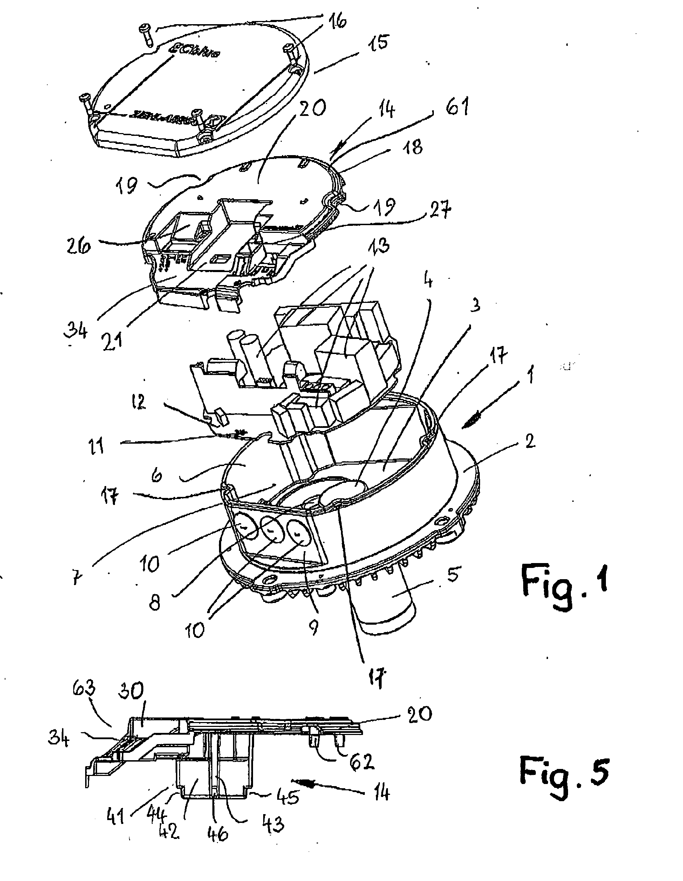

Die in Fig. 1 dargestellte Elektronikeinheit ist Bestandteil eines Elektromotors, insbesondere eines Außenläufermotors. Er hat einen Stator und einen ihn umgebenden Rotor. Beide bilden den Motorteil des Elektromotors. Der Elektromotor hat einen Rotormantel, der mit einer Statorbuchse 1 verbunden wird. Sie hat an dem dem Motorteil zugewandten Ende einen umlaufenden Radialflansch 2. Die Buchse 1 hat einen Boden 3, der mittig eine Öffnung aufweist. Von ihrem Rand steht in das Innere der Buchse 1 eine Hülse 4 ab, die vorteilhaft einstückig mit dem Boden 3 ausgebildet ist. Von der Unterseite des Bodens 3 steht ein Lagerrohr 5 ab, das ebenfalls vorteilhaft einstückig mit dem Boden 3 ausgebildet ist. Im Lagerrohr 5 wird eine (nicht dargestellte) Motorwelle mit wenigstens einem Lager drehbar gelagert. Die Buchse 1 hat einen im Wesentlichen zylindrischen Mantel 6, der einen Einbauraum 7 umgibt. Der Boden 3 trennt diesen Einbauraum 7 vom (nicht dargestellten) Motorteil.

Im Bereich neben der Hülse 9 ist der Boden 3 mit wenigstens einer Durchtrittsöffnung 8 versehen, durch welche Leitungen vom Motorteil aus abgedichtet in den Einbauraum 7 geführt werden. Zur Abdichtung der Durchtrittsöffnung 8 kann eine (nicht dargestellte) Durchführungstolle verwendet werden, durch welche die Leitungen abgedichtet in den Einbauraum geführt werden. Auf den Boden 3 wird nach dem Durchführen der Leitungen durch die Durchtrittsöffnung 8 eine Vergussmasse aufgebracht. Sie besteht in vorteilhafter Weise aus einem Material mit hoher thermischer Leitfähigkeit, um in noch zu beschreibender Weise eine gute Wärmeabfuhr zu ermöglichen.

Der Mantel 6 der Buchse 1 ist mit einer Abflachung 9 versehen, in der sich beispielhaft drei Durchtrittsöffnungen 10 befinden, durch welche von außen Anschlussleitungen geführt werden.

In den Einbauraum 7 wird eine Leistungselektronik-Baugruppe 11 eingesetzt. Es hat eine Leiterplatine 12, auf der sich Leistungselektronik-Bausteine 13 befinden. Die Leiterplatine 12 hat eine (nicht dargestellte) Öffnung, in welche in der Einbaulage die Hülse 4 ragt. Die vom Motor kommenden, durch die Durchtrittsöffnung 8 geführten Leitungen sind an die Leistungselektronik-Baugruppe angeschlossen. Auch die durch die Durchtrittsöffnungen 10 von außen zugeführten Anschlussleitungen sind an das Bauteil 11 angeschlossen. Vorteilhaft sind die Leiterplatine 12 und zumindest ein Teil der Bausteine 13 in der auf den Boden 3 der Buchse 1 aufgebrachten Vergussmasse eingebettet. Diese Vergussmasse kann bis zum freien Rand der Hülse 4 in die Buchse 1 eingebracht werden.

In die Buchse 1 wird ein Aufnahmeteil 14 eingesetzt, das in geeigneter Weise an der Buchse 1 befestigt wird. Das Aufnahmeteil 14 hat einen an den Innenquerschnitt des Mantels 6 angepassten Umriss, so dass eine einfache Montage des Aufnahmeteiles 14 in der Buche 1 gewährleistet ist. Da der Mantel 6 unrunden Innenquerschnitt hat und der Umriss des Aufnahmeteiles 14 entsprechend angepasst ist, lässt sich das Aufnahmeteil 14 problemlos in der richtigen Einbaulage einbauen.

Auf die Buchse 1 wird ein Deckel 15 aufgesetzt, der vorteilhaft mit Schrauben 16 an der Buchse 1 befestigt wird. Der Mantel 6 ist mit entsprechenden Gewindebohrungen 17 versehen, die in über die Innenseite des Mantels 6 vorstehenden Bereichen des Mantels vorgesehen sind. Der Deckel 15 lässt sich selbstverständlich auch auf andere Weise am Mantel 6 der Buchse 1 befestigen. Der Rand 18 des Aufnahmeteiles 14 ist mit entsprechenden Vertiefungen 19 versehen, in welche die Verdickungen des Buchsenmantels 6 eingreifen.

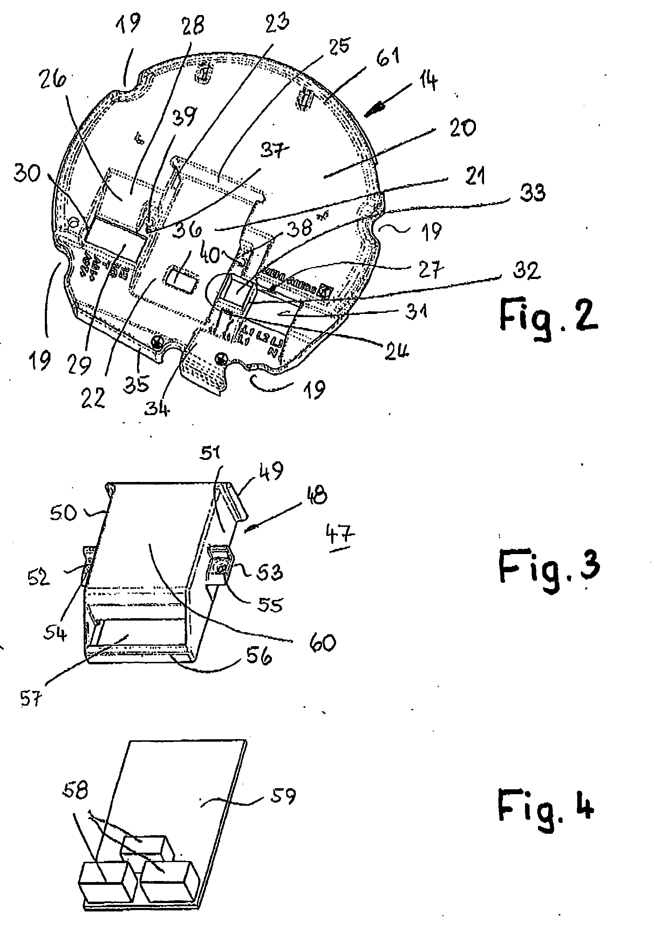

Das Aufnahmeteil 14 hat einen im Wesentlichen ebenen Deckelteil 20 (Fig. 5). In den Deckelteil 20 ragt eine Vertiefung 21, die im Ausführungsbeispiel rechteckigen Umriss hat (Fig. 2) und mit einem gegenüber dem Deckelteil 20 vertieft liegenden Boden 22 versehen ist. An den Boden 22 schließen Seitenwände 23, 24 an, die sich quer zum Boden 22 erstrecken. Außerdem schließt an den Boden 22 eine Rückwand 25 an, die die Seitenwände 23, 24 an ihrem inneren Ende miteinander verbindet und ebenfalls quer zum Boden 22 sich erstreckt. Vorteilhaft liegen die Seitenwände 23, 24 und die Rückwand 25 senkrecht zum Boden 22. Die Rückwand 25 schließt rechwinklig an die Oberseite des Deckelteiles 20 an.

Die Seitenwände 23, 24 verbinden über einen Teil ihrer Länge den Boden ebenfalls mit der Oberseite des Deckelteiles 20. Dieser Teil der Seitenwände 23, 24 schließt an die Rückwand 25 an. Der restliche Teil der Seitenwände 23, 24 hat wesentlich geringere Höhe, weil in diesem Bereich die Vertiefung 21 in seitliche Vertiefungen 26, 27 mündet. Die Vertiefung 26 hat eine von der Oberseite des Deckelteiles 20 ausgehende Schrägfläche 28, die mit der Deckelteiloberseite einen stumpfen Winkel einschließt. Sie erstreckt sich zu einer Öffnung 29, die beispielhaft rechteckigen Umriss hat. An den von der Vertiefung 21 abgewandten Rand der Öffnung 29 schließt senkrecht eine Seitenwand 30 an, die sich bis zur Oberseite des Deckelteiles 20 erstreckt. Die Vertiefung 26 wird lediglich durch die Schrägfläche 28 sowie an die senkrecht hierzu anschließende Seitenwand 30 begrenzt. In Richtung auf die benachbarte Vertiefung 21 ist die Vertiefung 26 offen. Außerdem ist die Vertiefung 26 an ihrer der Schrägfläche 28 gegenüberliegenden Seiten nach außen offen.

Die auf der anderen Seite der Vertiefung 21 liegende Vertiefung 27 ist ebenfalls in Richtung auf die Vertiefung 21 offen. In der Vertiefung 27 befindet sich ebenfalls eine Öffnung 31, die beispielhaft rechteckigen Umriss hat

An die der Vertiefung 21 zugewandte Seite der Öffnung 31 schließt eine domartige Erhöhung 32 an, deren Seitenwände eine Durchgriffsöffnung 33 begrenzen. Sie wird an einer Seite von einem Teil der Seitenwand 24 der mittleren Vertiefung 21 begrenzt.

Der Boden 22 der mittleren Vertiefung 21 schließt an dem von der Rückwand 25 abgewandten Ende an eine Schrägfläche 34 an, die sich über die Breite des Aufnahmeteiles 4 in diesem Bereich erstreckt Die Schrägfläche 34 schließt stumpfwinklig an einen ebenen Rand 35 an, mit dem das Aufnahmeteil 14 in der Einbaulage an der Innenwand der Abflachung 9 des Buchsenmantels 6 anliegt. Die Schrägfläche 34 erstreckt sich im Bereich der Vertiefung 26 bis zur Öffnung 29.

Im Boden 22 der mittleren Vertiefung 19 ist etwa in Höhe der Öffnung 29 eine weitere Öffnung 36 vorgesehen, die ebenfalls beispielhaft rechteckigen Umriss hat.

Im Bereich der Seitenwände 23, 24 der mittleren Vertiefung 19 befinden sich zwei Auflageflächen 37, 38, in denen sich jeweils eine Öffnung 39, 40 befindet.

Das Aufnahmeteil 14 weist zumindest im Bereich seines Deckelteils 20 eine längs seines Randes verlaufende Vertiefung 61 auf, die als Auffangrinne für anfallende Feuchtigkeit, insbesondere Kondenswasser, dient. In der rinnenartigen Vertiefung 61 lässt sich die angefallene Flüssigkeit problemlos entfernen. Zudem wird durch die Auffangrinne 61 verhindert, dass die Flüssigkeit in den Bereich der Leistungselektronik-Baugruppe 11 gelangt.

Wie Fig. 5 zeigt, steht von der Unterseite des Aufnahmeteiles 14 ein Abstützelement 41 ab, mit dem das Aufnahmeteil 14 in der Einbaulage auf der Stirnseite der Hülse 4 in der Buchse 1 aufliegt. Vorteilhaft wird das Abstützelement 41 durch zwei einander senkrecht kreuzende Stege 42, 43 gebildet, die vorteilhaft einstückig miteinander und mit dem Aufnahmeteil 14 ausgebildet sind. Die beiden Stege 42, 43 sind an ihren Außenrändern am freien Ende jeweils mit einer nach unten offenen Vertiefung 44 bis 46 versehen. Diese Vertiefungen sind so ausgebildet, dass die Stege 42, 43 in die zylindrische Hülse 4 eingreifen und sich auf der Stirnseite der Hülse 4 abstützen. Auf diese Weise ist eine zusätzliche Einbauhilfe gegeben, die den Zusammenbau der Elektronikeinheit des Elektromotors vereinfacht. Das Abstützelement 41 führt zu einer hohen Versteifung des Aufnahmeteiles 14. Zur hohen Steifigkeit trägt die Kreuzform des Abstotzelementes 41 bei.

Das Abstützelement 41 kann auch jede andere geeignete Form haben, beispielsweise als Hülse ausgebildet sein. So kann das Abstützelement 41 beispielsweise so ausgebildet sein, dass es die Hülse 4 abdichtet.

Durch die Öffnungen 29, 31, 33, 36 können Anschlussklemmen und Leuchten geführt werden. Über die Öffnung 36 der Vertiefung 21 kann eine elektrische Verbindung zwischen einem Funktionserweiterungsmodul 47 und der Leistungselektronik-Baugruppe 11 hergestellt werden.

Die Vertiefung 21 dient zur Aufnahme des Funktionserweiterungsmoduls 47. Es hat ein Gehäuse 48 (Fig. 3), das in die Vertiefung 21 eingesetzt werden kann. Das Gehäuse 48 hat eine Rückwand 49, mit der es an der Rückwand 25 der Vertiefung 21 in der Einbaulage anliegt. An die Rückwand 49 schließen senkrecht zwei Seitenwände 50, 51 an. Von ihnen steht jeweils ein Auflager 52, 53 ab, mit dem das Gehäuse 48 auf den Auflageflächen 37, 38 des Aufnahmeteiles 14 aufliegt. Die Auflager 52, 53 haben jeweils eine Öffnung 54, 55 für Schrauben oder dgl., die durch diese Öffnungen in die Öffnungen 39, 40 in den Auflageflächen 37, 38 geschraubt werden.

Das Gehäuse 48 ist an seiner von der Rückwand 49 abgewandten Seite mit einem Rahmenteil 56 versehen, der eine Öffnung 57 umschließt.

Das Funktionserweiterungsmodul 47 ist so ausgebildet, dass es Anschlussklemmen 58 aufnehmen kann (Fig. 4). Die Anschlussklemmen 58 sitzen auf einer Platine 59. In der Einbaulage befinden sich die Anschlussklemmen 58 im Anschlussbereich der Steuerelektronik des Elektromotors.

Das Aufnahmeteil 14 ermöglicht es dem Anwender des Elektromotors, ihn nachträglich in seinen Funktionen zu erweitern. Der Elektromotor wird mit einer Basisfunktionalität ausgestattet, die für viele Anwendungsfälle des Elektromotors ausreichend ist. Wünscht der Anwender Zusatzfunktionen oder auch alternative Steuersysteme für eine spezielle Anwendung, kann er den Elektromotor durch Einsatz des Funktionserweiterungsmoduls 47 entsprechend erweitern. Je nach gewünschter Zusatzfunktion wird ein entsprechendes Funktionserweiterungsmodel 47 eingesetzt. Es lässt sich in den Elektromotor sehr einfach vom Anwender einsetzen. Er muss lediglich den Deckel abnehmen, dann ist das Aufnahmeteil 14 frei zugänglich. Da es die Leistungselektronik-Baugruppe 11 abdeckt, kann der Anwender gefahrlos das entsprechende Modul 47 einbauen. Das Gehäuse 48 des Funktionserweiterungsmoduls 47 ist an die Form der Vertiefung 21 des Aufnahmeteiles 14 angepasst. In den Zeichnungen ist das Gehäuse 48 nur beispielhaft dargestellt. Es kann selbstverständlich je nach Gestaltung des Aufnahmeteiles 14 unterschiedlichste Formen haben. Auch das Aufnahmeteil 14 ist hinsichtlich seiner konkreten Gestaltung nur beispielhaft dargestellt und beschrieben. Es kann ebenfalls unterschiedlichste Ausgestaltungen haben. Wesentlich ist, dass dieses Aufnahmeteil 14 wenigstens einen Aufnahmeplatz aufweist, an dem das Funktionserweiterungsmodul 47 befestigt werden kann. Das Aufnahmeteil 14 hat die Öffnung 36, über die eine Kontaktierung der Elektronik des Funktionserweiterungsmoduls 47 mit der Steuerelektronik der Leistungselektronik-Baugruppe 11 möglich ist. Über diese Kontaktierung wird das Funktionserweiterungsmodul mit Strom versorgt sowie eine physikalische Kommuni-kationsverbindung zwischen der Leistungselektronik-Baugruppe 11 und dem Funktionserweiterungsmodul 47 hergestellt.

Wie an Hand von Fig. 4 beispielhaft beschrieben und dargestellt, kann das Funktionserweiterungsmodul 47 so ausgebildet sein, dass es Anschlussklemmen 58 aufnehmen kann. Die Anordnung diese Anschlussklemmen 58 ist so gestaltet, dass sie sich im Anschlussbereich der Steuerelektronik des Bauteiles 11 befindet.

Das Aufnahmeteil 14 besteht vorteilhaft aus Kunststoff, insbesondere aus elektrisch isolierendem Kunststoff. Das Aufnahmeteil 14 kann in einem einzigen Spritzgussvorgang zusammen mit dem Abstützelement 41 kostengünstig gefertigt werden. Da das Aufnahmeteil 14 vorteilhaft einstückig hergestellt ist, lässt es sich auch sehr einfach in der Buchse 1 montieren.

Zumindest die dem Deckel 15 zugewandte Sichtseite 60 des Gehäuses 48 ist vorteilhaft für Signallicht durchlässig. Dadurch ist es möglich, im Gehäuse 48 geschützt beispielsweise l-EDs als Leuchtmittel oder als Kontrollanzeigen unterzubringen. Sie sind durch die Sichtseite 60 hindurch gut für den Anwender erkennbar. Selbstverständlich besteht dann auch der Deckel 15 aus einem entsprechend lichtdurchlässigen Material.

Bevorzugt bestehen der Deckel 15 und zumindest die Sichtseite 60, vorzugsweise jedoch das gesamte Gehäuse 48, aus für Signale durchlässigem Material. Dadurch besteht die Möglichkeit, das Funktionserweiterungsmodul 47 in eingebauter Lage von außen beispielsweise mittels Infrarot- oder Funksignalen zu steuern und/oder einzustellen und/oder zu überwachen. Für die Einstellung ist dann die Abnahme des Deckels nicht erforderlich.

Der beschriebene Elektronikteil ist vorteilhaft für Außenläufermotoren mit integrierter Steuerelektronik geeignet. Die Elektronik des Funktionserweiterungsmoduls 47 ist selbstverständlich an die Steuerelektronik dieses Außenläufermotors angepasst. Das beschriebene Aufnahmeteil 14 mit dem Aufnahmeplatz für das Funktionserweiterungsmodul ist selbstverständlich auch bei anderen Arten von Elektromotoren einsetzbar. Der Einsatz des Aufnahmeteiles 14 hat den Vorteil, dass für die unterschiedlichsten Anwendungsfälle nur eine kleine Produktvarianz erforderlich ist. Der Elektromotor mit dem Aufnahmeteil 14 wird in einer Grund- bzw. Basisversion ausgeliefert. Der Kunde muss dann lediglich, wenn er Zusatzfunktionen benötigt, das entsprechende Funktionserweiterungsmodul 47 in der beschriebenen Weise einbauen.

Das Aufnahmeteil 14 weist an seiner der Leistungselektronik-Baugruppe zugewandten Seite vorteilhaft Fixierelemente 62 auf (Fig. 5). Sie sind vorteilhaft einstückig mit dem Aufnahmeteil 14 ausgebildet und so vorgesehen, dass mit ihnen zumindest ein Teil der Leistungselektronik-Bausteine 13 fixiert werden kann. Die Fixierelemente 62 können beispielsweise durch Ringe gebildet sein, die solche Bausteine 13 umfassen. Dadurch werden diese Bausteine 13 beim Betrieb des Elektromotors gegen Schwingungen geschützt. Das hat den Vorteil, dass die zu diesen Bausteinen 13 geführten Kontaktdrähte nicht brechen, wie dies bei nicht gegen Schwingungen abgestützte Bausteine häufig zu beobachten ist.

Aufgrund der beschriebenen Ausbildung weist das Aufnahmeteil 14 im Bereich der Abflachung 9 des Statormantels 6 einen vertieften Bereich 63 auf, der gegenüber dem Deckelteil 20 in Richtung auf die Leistungselektronik-Baugruppe 11 zurückgesetzt ist. Dieser vertiefte Bereich 63 wird umfangsseitig durch den Mantel 6 mit der Abflachung 9 begrenzt. Die Durchtrittsöffnungen 10 in der Abflachung 9 befinden sich im Bereich oberhalb dieses vertieften Bereichs 63. Bei der Montage der durch die Durchtrittsöffnungen 10 geführten Kabel abfallende Kabelisolierteile können, wenn sie in die Buchse 1 fallen sollten, in diesem vertieften Bereich 63 aufgefangen werden, so dass sie nicht in den Bereich der Leistungselektronik-Baugruppe 11 gelangen und dort gegebenenfalls zu Problemen führen.

Der Deckel 15 ist vorteilhaft so gestaltet, dass er auf dem Deckelteil 20 des Aufnahmeteils 14 aufliegt. Der Deckel 15 liegt mit seinem Rand auf der Stirnseite des Mantels 6 der Statorbuchse 1 auf und wird mit den Schrauben 16 auf ihm lösbar befestigt. Der Deckel 15 ist vorteilhaft so gestaltet, dass er nach dem Aufschrauben auf den Mantel 6 unter Druck am Deckelteil 20 des Aufnahmeteiles 14 anliegt.

Der Deckel 15 liegt unter Zwischenlage einer Dichtung auf der Stirnseite des Mantels 6 auf, so dass die Buchse 1 einwandfrei nach außen abgedichtet ist. Die Dichtung ist vorteilhaft an den Rand des Deckels 15 angespritzt, so dass sich eine einfache Montage ergibt, da nicht in einem zusätzlichen Montageschritt ein Dichtring eingesetzt werden muss.

Das Aufnahmeteil 14 schützt die Leistungselektronik-Baugruppe 11 optimal vor Berührung, Beschädigung und Verschmutzung. Dabei ist das Aufnahmeteil 14 so gestaltet, dass im Einbauraum 7 noch ausreichend Platz für eine leichte Installation und für die Aufnahme des Funktionserweiterungsmoduls 47 vorhanden ist.

## Patentansprüche

1. Elektromotor, vorzugsweise Außenläufermotor mit integrierter Steuerelektronik, der mit einer Basisfunktionalität ausgestattet und mit einer Motoreinheit und einer Elektronikeinheit versehen ist, die eine Leistungselektronik-Baugruppe (11) aufweist, die auch eine Steuerelektronik aufweist und in einem Einbauraum (7) untergebracht ist, der durch einen Deckel (15) geschlossen und in einer Statorbuchse (1) vorgesehen ist, wobei der Deckel (15) zumindest teilweise aus für Signale, wie IR-Signale oder Funksignale, durchlässigem Material besteht und auf der Statorbuchse (1) befestigt ist, wobei zumindest die strom/spannungsführenden elektrischen/elektronischen Elemente (13) der Leistungselektronik-Baugruppe (11), an die die vom Motor kommenden Leitungen sowie die von außen zugeführten Anschlussleitungen angeschlossen sind, durch wenigstens ein Berührungsschutzelement (14) abgedeckt sind, das zwischen der Leistungselektronik-Baugruppe (11) und dem Deckel (15) angeordnet ist,
**dadurch gekennzeichnet dass** das Berührschutzelement (14) mit wenigstens einem durch eine Vertiefung im Berührschutzelement (14) gebildeten Aufnahmeplatz (21) für ein die Basisfunktionalität um Zusatzfunktionen erweiterndes Funktionserweiterungsmodul (47) versehen ist, das am Aufnahmeplatz (21) befestigt und im Signalweg unterhalb des Deckels (15) im Bereich zwischen dem Berührschutzelement (14) und dem Deckel (15) angeordnet und durch die Signale betätigbar ist.

2. Elektromotor nach Anspruch 1,
**dadurch gekennzeichnet, dass** der Deckel (15) auf der Statorbuchse (1) unter Zwischenlage einer Dichtung befestigt ist, die vorzugsweise an den Rand des Deckels (15) angespritzt ist.

3. Elektromotor nach Anspruch 1 oder 2,
**dadurch gekennzeichnet, dass** das Berührschutzelement (14) mit seinem Rand (18) an der Innenseite einer den Einbauraum (7) umgebenden Wand (6) anliegt.

4. Elektromotor nach einem der Ansprüche 1 bis 3
**dadurch gekennzeichnet, dass** das Berührschutzelement (14) zumindest über einen Teil seines Umfanges mit wenigstens einer rillenförmigen Vertiefung (61) versehen ist.

5. Elektromotor nach einem der Ansprüche 1 bis 4,
**dadurch gekennzeichnet, dass** das Berührschutzelement (14) einen vertieften Bereich (63) aufweist, der vorteilhaft umfangsseitig durch einen Teil der den Einbauraum (7) umgebenden Wand (6) begrenzt ist.

6. Elektromotor nach einem der Ansprüche 1 bis 5,
**dadurch gekennzeichnet, dass** die Wand (6) mit vorzugsweise in einem ebenen Teil (9) der Wand (6) liegenden Durchtrittsöffnungen (10) für Anschlusskabel im Bereich des vertieften Bereiches (63) des Berührschutzelementes (14) versehen ist.

7. Elektromotor nach einem der Ansprüche 1 bis 6,
**dadurch gekennzeichnet, dass** das Berührschutzelement (14) an seiner der Leistungselektronik-Baugruppe (11) zugewandten Seite mit wenigstens einem Fixierelement (62) für Bausteine (13) der Leistungselektronik-Baugruppe (11) versehen ist.

8. Elektromotor nach Anspruch 7,
**dadurch gekennzeichnet, dass** das Fixierelement (62) einstückig mit dem Berührschutzelement (14) ausgebildet ist.

9. Elektromotor nach einem der Ansprüche 1 bis 8,
**dadurch gekennzeichnet, dass** das Berührschutzelement (14) an seiner der Leistungselektronik-Baugruppe (11) zugewandten Seite mit wenigstens einem Abstützelement (41) versehen ist.

10. Elektromotor nach Anspruch 9,
**dadurch gekennzeichnet, dass** sich das Abstützelement (41) auf einem in den Einbauraum (7) ragenden Ansatz (4) der Statorbuchse (1) abstützt.

11. Elektromotor nach einem der Ansprüche 1 bis 10,
**dadurch gekennzeichnet, dass** der Deckel (15) unter Druck auf dem Berührschutzelement (14) auflegt.

12. Elektromotor nach einem der Ansprüche 1 bis 11,
**dadurch gekennzeichnet, dass** der Deckel (15) zumindest teilweise aus lichtdurchlässigem Material besteht.

## Claims

1. Electric motor, preferably external rotor motor with integrated control electronics, which is equipped with a base functionality and is provided with a motor unit and an electronics unit, which comprises a power electronics assembly (11), which also comprises a control electronics and is housed in an installation space (7) that is closed by a cover (15) and is provided in a stator bushing (1), wherein the cover (15) consists at least in part of material that is permeable to signals, such as IR signals or radio signals, and is fastened to the stator bushing (1), wherein at least the current-carrying/voltage-carrying electrical/ electronic elements (13) of the power electronics assembly (11), to which are connected the leads coming from the motor as well as the externally fed connection leads, are covered by at least one contact protection element (14) that is arranged between the power electronics assembly (11) and the cover (15), **characterised in that** the contact protection element (14) is provided with at least one receiving space (21), formed by a recess in the contact protection element (14), for a function expansion module (47) that expand the base functionality by additional functions, which is fastened to the receiving space (21) and is arranged in the signal path underneath the cover 15 in the region between the contact protection element (14) and the cover (15), and can be actuated by the signals.

2. Electric motor according to claim 1, **characterised in that** the cover (15) is secured to the stator bushing (1) with the interposition of a seal, which is preferably injection moulded onto the edge of the cover (15).

3. Electric motor according to claim 1 or 2, **characterised in that** the contact protection element (14) abuts with its edge (18) against the inside of a wall (6) surrounding the installation space (7).

4. Electric motor according to one of claims 1 to 3, **characterised in that** the contact protection element (14) is provided at least over a part of its circumference with at least one groove-shaped recess (61).

5. Electric motor according to one of claims 1 to 4, **characterised in that** the contact protection element (14) comprises a recessed area (63) that is preferably bounded on the circumferential side by part of the wall (6) surrounding the installation space (7).

6. Electric motor according to one of claims 1 to 5, **characterised in that** the wall (6) is provided with passage openings (10) preferably lying in a flat part (9) of the wall (6) for connecting cables in the region of the recessed area (63) of the contact protection element (14).

7. Electric motor according to one of claims 1 to 6, **characterised in that** the contact protection element (14) is provided on its side facing towards the power electronics assembly (11) with at least one fixing element (62) for components (13) of the power electronics assembly (11).

8. Electric motor according to claim 7, **characterised in that** the fixing element (62) is formed integrally with the contact protection element (14).

9. Electric motor according to one of claims 1 to 8, **characterised in that** the contact protection element (14) is provided on its side facing towards the power electronics assembly (11) with at least one supporting element (41).

10. Electric motor according to claim 9, **characterised in that** the supporting element (41) is supported on a lug (4) of the stator bushing (1) projecting into the installation space (7).

11. Electric motor according to one of claims 1 to 10, **characterised in that** the cover (15) rests under pressure on the contact protection element (14).

12. Electric motor according to one of claims 1 to 11, **characterised in that** the cover (15) consists at least in part of transparent material.

## Revendications

1. Moteur électrique, notamment moteur à rotor ou induit extérieur avec une électronique de commande intégrée, équipé d'une fonctionnalité de base et doté d'une unité de moteur et d'une unité électronique, qui présente un groupe d'électronique de puissance (11), et présente également une électronique de commande et est logée dans un espace d'implantation (7) fermé par un couvercle (15) et prévu dans un fourreau de stator (1), moteur dans lequel le couvercle (15) est réalisé, au moins en partie, en un matériau perméable à des signaux tels que des signaux IR ou des signaux radio, et est fixé sur le fourreau de stator (1), et
dans lequel au moins les composants électriques/électroniques (13) conduisant le courant/la tension, du groupe d'électronique de puissance (11), auxquels sont raccordés les conducteurs en provenance du moteur ainsi que les conducteurs de branchement amenés de l'extérieur, sont recouverts par au moins un élément de protection contre les contacts accidentels (14), qui est agencé entre le groupe d'électronique de puissance (11) et le couvercle (15),
**caractérisé en ce que** l'élément de protection contre les contacts accidentels (14) est pourvu d'au moins un emplacement d'accueil (21) formé par un creux dans l'élément de protection contre les contacts accidentels (14) et destiné à un module d'extension de fonction (47), qui élargit la fonctionnalité de base avec des fonctions additionnelles, est fixé dans l'emplacement d'accueil (21), est agencé dans le parcours de signal sous le couvercle (15) dans la zone entre l'élément de protection contre les contacts accidentels (14) et le couvercle (15), et peut être actionné par les signaux.

2. Moteur électrique selon la revendication 1, **caractérisé en ce que** le couvercle (15) est fixé sur le fourreau de stator (1) avec interposition d'un joint d'étanchéité, qui de préférence est moulé par injection sur le bord du couvercle (15).

3. Moteur électrique selon la revendication 1 ou la revendication 2, **caractérisé en ce que** l'élément de protection contre les contacts accidentels (14) s'appuie par son bord (18), contre le côté intérieur d'une paroi (6) entourant l'espace d'implantation (7).

4. Moteur électrique selon l'une des revendications 1 à 3, **caractérisé en ce que** l'élément de protection contre les contacts accidentels (14) est pourvu, au moins sur une partie de sa périphérie, d'au moins un creux en forme de rainure (61).

5. Moteur électrique selon l'une des revendications 1 à 4, **caractérisé en ce que** l'élément de protection contre les contacts accidentels (14) présente une zone en creux (63), qui est avantageusement délimitée du côté périphérie, par une partie de la paroi (6) entourant l'espace d'implantation (7).

6. Moteur électrique selon l'une des revendications 1 à 5, **caractérisé en ce que** la paroi (6) est pourvue, dans la région de la zone en creux (63) de l'élément de protection contre les contacts accidentels (14), d'ouvertures de passage (10) situées de préférence dans une partie plane (9) de la paroi (6) et destinées à des câbles de branchement.

7. Moteur électrique selon l'une des revendications 1 à 6, **caractérisé en ce que** l'élément de protection contre les contacts accidentels (14) est pourvu sur son côté dirigé vers le groupe d'électronique de puissance (11), d'au moins un élément de fixation (62) pour des composants (13) du groupe d'électronique de puissance (11).

8. Moteur électrique selon la revendication 7, **caractérisé en ce que** l'élément de fixation (62) est réalisé d'un seul tenant avec l'élément de protection contre les contacts accidentels (14).

9. Moteur électrique selon l'une des revendications 1 à 8, **caractérisé en ce que** l'élément de protection contre les contacts accidentels (14) est pourvu sur son côté dirigé vers le groupe d'électronique de puissance (11), d'au moins un élément d'appui (41).

10. Moteur électrique selon la revendication 9, **caractérisé en ce que** l'élément d'appui (41) s'appuie sur un appendice (4) du fourreau de stator (1), qui fait saillie dans l'espace d'implantation (7).

11. Moteur électrique selon l'une des revendications 1 à 10, **caractérisé en ce que** le couvercle (15) repose sous pression sur l'élément de protection contre les contacts accidentels (14).

12. Moteur électrique selon l'une des revendications 1 à 11, **caractérisé en ce que** le couvercle (15) est constitué au moins en partie d'un matériau perméable à la lumière.
